# EUROPEAN PATENT SPECIFICATION

(11) **EP 4 401 191 B1**
(45) Date of publication and mention of the grant of the patent: **19.11.2025**
(21) Application number: 23858418.9
(22) Date of filing: 07.07.2023
(51) Int. Cl.: H01M 10/42, H01M 50/211, H01M 50/502, H01M 10/658, H01M 10/613, H01M 10/647, H01M 50/249, H01M 50/24

(54) **BATTERY MODULE**
BATTERIEMODUL
MODULE DE BATTERIE

(30) Priority: 02.12.2022 KR 20220166951; 30.03.2023 KR 20230042348
(43) Date of publication of application: 17.07.2024
(73) Proprietor: LG ENERGY SOLUTION, LTD., Seoul 07335 (KR)
(72) Inventor: PARK, Jeong-Hoon, Daejeon 34122 (KR); KIM, Soo-Youl, Daejeon 34122 (KR); JUNG, Hye-Mi, Daejeon 34122 (KR)
(74) Representative: Plasseraud IP
(86) International application number: PCT/KR2023/009691
(87) International publication number: WO 2024/117429

(56) References cited:
- WO-A1-2022/244985
- CN-A- 106 785 225
- CN-U- 216 563 355
- KR-A- 20220 119 956
- KR-A- 20220 120 916
- KR-B1- 102 456 993
- KR-B1- 102 456 993
- US-A1- 2022 037 715

## Description

### TECHNICAL FIELD

The present invention relates to a battery module.

### BACKGROUND ART

As the demand for portable electronic products such as laptops, video cameras, and mobile phones has rapidly increased and the commercialization of robots, electric vehicles, and the like has begun in earnest, research on high-performance secondary batteries capable of repeated charge/discharge has been actively conducted.

Currently commercialized secondary batteries include nickel cadmium batteries, nickel hydride batteries, nickel zinc batteries, lithium secondary batteries, and the like, and among them, lithium secondary batteries are in the spotlight because they have almost no memory effect compared to nickel-based secondary batteries and thus have advantages of free charge/discharge, very low self-discharge rate, and high energy density.

Such lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

In general, lithium secondary batteries may be classified into can-type secondary batteries in which electrode assemblies are embedded in a metal can and pouch-type secondary batteries in which electrode assemblies are embedded in a pouch of aluminum laminate sheets, depending on the shape of an exterior material.

Recently, secondary batteries have been widely used for driving or energy storage not only in small devices such as portable electronic devices, but also in medium/large devices such as electric vehicles and energy storage systems (ESSs). These secondary batteries are accommodated together inside a module case in a state where a plurality of them are electrically connected, which may form one battery module. In addition, such a battery module may be connected in plurality to form one battery pack.

However, when a plurality of secondary batteries (battery cells) or a plurality of battery modules are concentrated in a narrow space as described above, they may be vulnerable to thermal events. In particular, when an event such as thermal runaway occurs in any one of the battery cells, high temperature gas, flame, heat, or the like may be generated. If such gas, flame, heat, or the like is transferred to other battery cells included in the same battery module, an explosive chain reaction situation such as thermal propagation may occur. In addition, this chain reaction may cause not only an accident such as fire or explosion in the corresponding battery module, but also fire or explosion in other battery modules.

Moreover, in the case of medium/large-sized battery packs for electric vehicles, a large number of battery cells and battery modules may be included to increase output and/or capacity, thereby further increasing the risk of thermal chain reaction. In addition, in the case of a battery pack mounted on an electric vehicle, there may be a user such as a driver in the vicinity thereof. Therefore, if a thermal event occurring in a specific battery module is not properly controlled and a chain reaction occurs, it may cause not only significant property damage but also loss of life.

Documents US 2022/037715 A1 and WO 2022/244985 A1 are about mitigating thermal events in battery modules.

### DISCLOSURE

### Technical Problem

The present disclosure is designed to solve the above-described problems and other problems.

Another object of the present disclosure may be to provide a battery module capable of suppressing heat propagation.

Still another object of the present disclosure may be to provide a battery module capable of maintaining safety even when exposed to flame or venting gas.

### Technical Solution

To this end, the invention relates to a battery module according to claim 1.

The battery module after the invention may present one or more feature(s) of claims 2 to 9.

The invention also relates to a battery pack according to claim 10.

The invention also relates to a vehicle according to claim 11.

### Advantageous Effects

According to at least one of the embodiments of the present disclosure, a battery module capable of suppressing heat propagation may be provided.

According to at least one of the embodiments of the present disclosure, a battery module including a barrier capable of suppressing the propagation of flame or venting gas may be provided.

According to at least one of the embodiments of the present disclosure, a battery module including a fire-resistant coating layer capable of maintaining the function of a barrier that may suppress heat propagation may be provided.

According to at least one of the embodiments of the present disclosure, a battery module including a structure for stably fixing the barrier may be provided.

According to at least one of the embodiments of the present disclosure, a battery module including a structure for sealing the gap between the barrier and the bus bar frame assembly may be provided.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a perspective view showing a battery module according to an embodiment of the present disclosure.
FIG. 2 is an exploded view showing a partial configuration of a battery module according to an embodiment of the present disclosure.
FIG. 3 is a view showing a partial configuration of a battery module according to an embodiment of the present disclosure.
FIG. 4 is a view showing a bus bar frame assembly of a battery module according to an embodiment of the present disclosure.
FIG. 5 is an exploded view showing a partial configuration of a barrier of a battery module according to an embodiment of the present disclosure.
FIG. 6 is a view showing that a portion of the cross-sectional configuration of a barrier of a battery module according to an embodiment of the present disclosure is coupled.
FIG. 7 is a view showing a portion of the cross-sectional configuration of a barrier of a battery module according to an embodiment of the present disclosure.
FIG. 8 is a perspective view showing a barrier of a battery module according to an embodiment of the present disclosure.
FIG. 9 is a view showing a portion of the cross-sectional configuration taken along the cutting line A-A' in FIG. 1.
FIG. 10 is a view showing a modified example of the cross-sectional configuration taken along the cutting line A-A' in FIG. 1.
FIG. 11 is a view showing a modified example of the cross-sectional configuration taken along the cutting line A-A' in FIG. 1.
FIG. 12 is an exploded view showing a portion of the cross-sectional configuration taken along the cutting line A-A' in FIG. 1.
FIG. 13 is a view showing a portion of the cross-sectional configuration taken along the cutting line A-A' in FIG. 1.
FIG. 14 is a view showing a modified example of the cross-sectional configuration taken along the cutting line A-A' in FIG. 1.
FIG. 15 is a view showing a modified example of the cross-sectional configuration taken along the cutting line A-A' in FIG. 1.
FIG. 16 is a view showing a modified example of the cross-sectional configuration taken along the cutting line A-A' in FIG. 1.
FIG. 17 is a view showing a modified example of the cross-sectional configuration taken along the cutting line A-A' in FIG. 1.
FIG. 18 is a view showing a modified example of the cross-sectional configuration taken along the cutting line A-A' in FIG. 1.
FIG. 19 is a view showing a modified example of the cross-sectional configuration taken along the cutting line A-A' in FIG. 1.
FIG. 20 is a view showing a modified example of the cross-sectional configuration taken along the cutting line A-A' in FIG. 1.
FIG. 21 is a view showing a modified example of the cross-sectional configuration taken along the cutting line A-A' in FIG. 1.
FIG. 22 is a view showing a modified example of the cross-sectional configuration taken along the cutting line A-A' in FIG. 1.
FIG. 23 is a view showing a modified example of the cross-sectional configuration taken along the cutting line A-A' in FIG. 1.
FIG. 24 is a view showing a modified example of the cross-sectional configuration taken along the cutting line A-A' in FIG. 1.
FIG. 25 is a view showing a modified example of the cross-sectional configuration taken along the cutting line A-A' in FIG. 1.
FIG. 26 is a view showing a modified example of the cross-sectional configuration taken along the cutting line A-A' in FIG. 1.
FIG. 27 is a view showing a portion of the cross-sectional configuration taken along the cutting line B-B' in FIG. 1.
FIG. 28 is a view showing a barrier and a battery cell of a battery module according to another embodiment of the present disclosure.
FIG. 29 is a view showing the coupling of a barrier and a battery cell of a battery module according to another embodiment of the present disclosure.
FIG. 30 is a front view showing the coupling of a barrier and a battery cell of a battery module according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

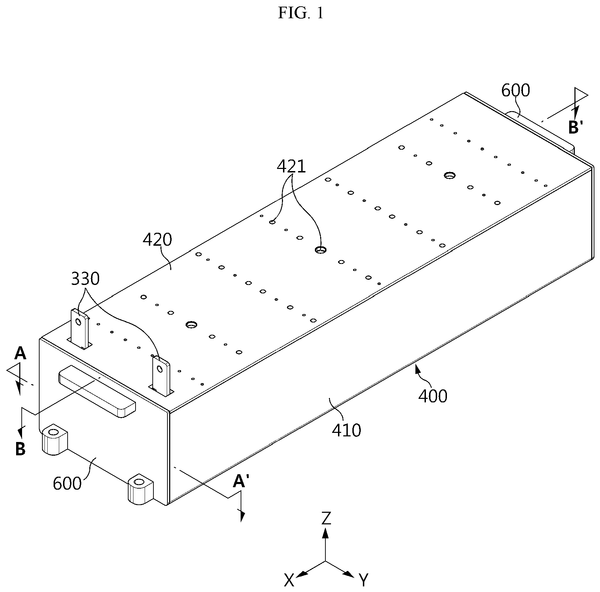

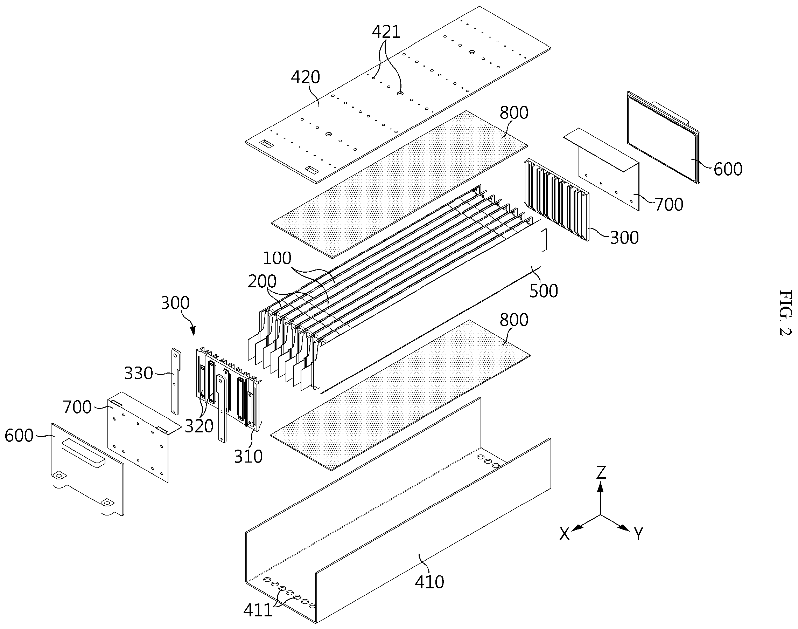

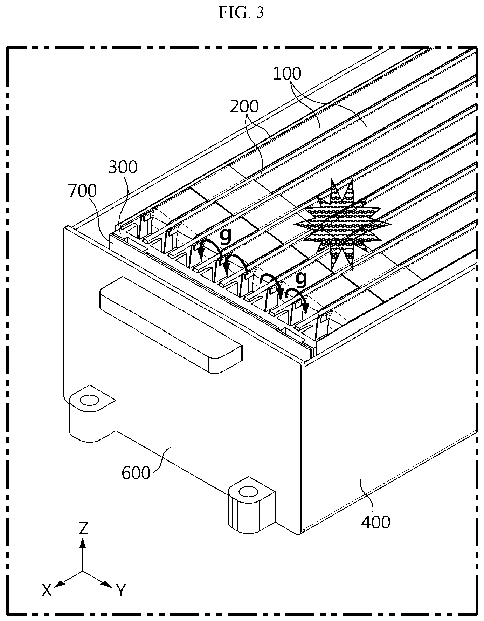

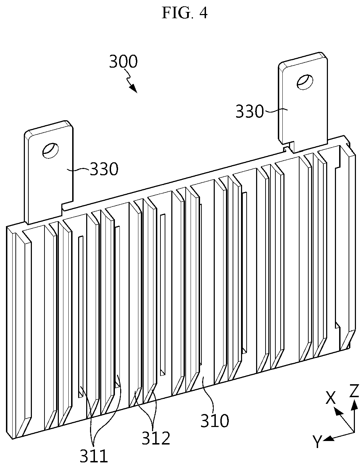

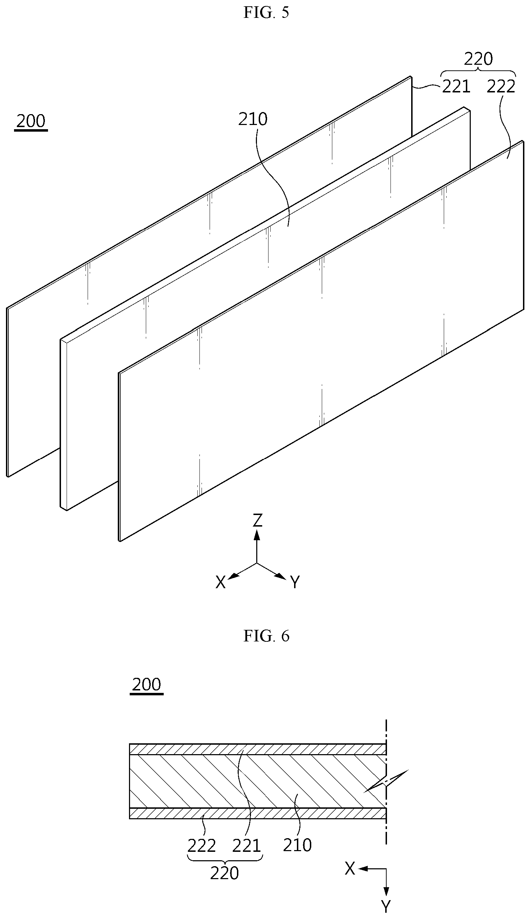

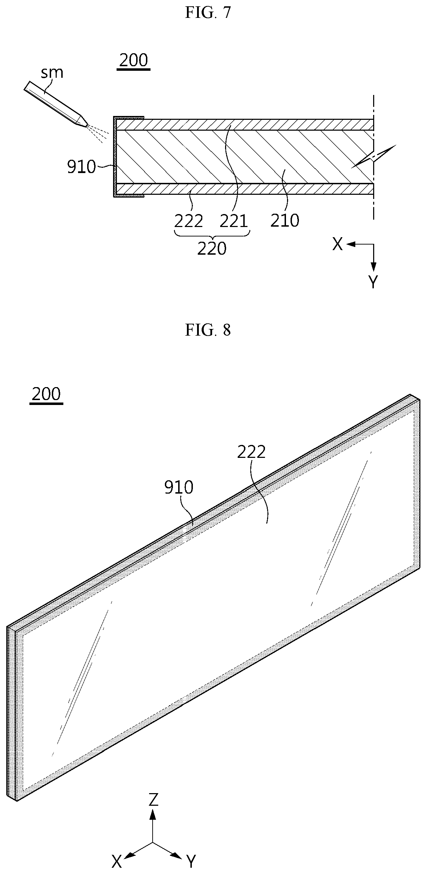

FIG. 1 is a perspective view showing a battery module according to an embodiment of the present disclosure. FIG. 2 is an exploded view showing a partial configuration of a battery module according to an embodiment of the present disclosure. FIG. 3 is a view showing a partial configuration of a battery module according to an embodiment of the present disclosure. FIG. 4 is a view showing a bus bar frame assembly 300 of a battery module according to an embodiment of the present disclosure. FIG. 5 is an exploded view showing a partial configuration of a barrier of a battery module according to an embodiment of the present disclosure. FIG. 6 is a view showing that a portion of the cross-sectional configuration of a barrier of a battery module according to an embodiment of the present disclosure is coupled. FIG. 7 is a view showing a portion of the cross-sectional configuration of a barrier of a battery module according to an embodiment of the present disclosure. FIG. 8 is a perspective view showing a barrier of a battery module according to an embodiment of the present disclosure. Referring to FIGS. 1 to 8, a battery module according to an embodiment of the present disclosure is configured to include a frame 400, a plurality of battery cells 100, a bus bar frame assembly 300, and a barrier 200.

The frame 400 may include an upper frame 420 and a lower frame 410. The lower frame may include a bottom plate and a pair of side plates extending from the bottom plate. The lower frame may form an interior space. The upper frame 420 and the lower frame 410 may be coupled by welding. The upper frame 420 may be coupled to a pair of side plates of the lower frame 410. Alternatively, the frame 400 may be integrally formed. The frame 400 may be configured in a rectangular parallelepiped shape. And the frame 400 may provide space therein. The frame 400 may form the exterior of the battery module. And, the frame 400 extends long in the front-rear direction or the X-axis direction. In addition, the frame 400 may be configured to be open in the front-rear direction or the X-axis direction.

The plurality of battery cells 100 is configured to be accommodated in the interior space provided by the frame 400. Here, each battery cell 100 may refer to a secondary battery. Each battery cell 100 may include a body 110 and an electrode lead 120 that protrudes in the front-rear direction of the body 110 or in the X-axis direction and -X-axis direction. The battery cell 100 may include an electrode assembly, an electrolyte, and a battery case. And in this case, the electrode assembly, the electrolyte, and battery case may constitute the body 110. The battery cell 100 may be a pouch-type secondary battery. The plurality of battery cells 100 may generate heat while charging or discharging. The plurality of battery cells 100 may function as a heat source. A plurality of battery cells 100 may form a battery module. The battery module may be configured to store and release energy by including one or more battery cells 100. The plurality of battery cells 100 is disposed or stacked in the left-right direction or the Y-axis direction.

The bus bar frame assembly 300 is located in front of the plurality of battery cells 100. And, each electrode lead 120 of the plurality of battery cells 100 may be electrically connected to the bus bar frame assembly 300. The bus bar frame assembly 300 may be configured to include a frame body 310, a bus bar 320, and a module terminal 330. The frame body 310 may be configured to cover the front side of the plurality of battery cells 100. The bus bar 320 may be provided, coupled, or fastened to the front surface of the frame body 310. In addition, the bus bar 320 may be configured in plurality. And, the module terminal 330 may be electrically connected to the bus bar 320. The module terminal 330 may function as an input/output terminal of the battery module. And, the frame body 310 may include a slit 311 formed long in the vertical direction or the Z-axis direction. The slit 311 may be configured to penetrate the frame body 310 in the front-rear direction or the X-axis direction. The slit 311 may be formed in plurality and may be located along the left-right direction or the Y-axis direction. Each electrode lead 120 of the plurality of battery cells 100 may pass through the slit 311. The electrode lead 120 may pass through the slit 311 and be electrically connected to the bus bar 320 provided on the front surface of the frame body 310. The bus bar frame assembly 300 may be formed in a pair. The bus bar frame assembly 300 may be provided on the front side and rear side of the plurality of battery cells 100, respectively.

The barrier 200 may be accommodated inside the frame 400. The barrier 200 may be configured in a rectangular shape. The barrier 200 may extend in the front-rear direction or the X-axis direction. And, the barrier 200 may be provided in plurality. Each barrier 200 is disposed between a plurality of battery cells 100. The barrier 200 may be disposed or stacked in the left-right direction or the Y-axis direction. The front side and rear side of the barrier 200 may be contacted, coupled, fastened, inserted, or attached to the bus bar frame assembly 300, respectively. And, the barrier 200 may be composed of one part or a plurality of parts. When the barrier 200 is composed of a plurality of parts, it may be referred to as a barrier assembly 200. The barrier 200 may suppress, delay, or prevent the propagation of flame or venting gas (g) in the left-right direction or the Y-axis direction. The barrier 200 may be made of a material that is not easily damaged even when exposed to flame or venting gas (g). The barrier 200 may be configured such that at least a portion thereof is inserted into the bus bar frame assembly 300.

The barrier is configured to include a coating portion. The coating portion is configured to cover a front edge of the barrier. The coating layer 910 has fire resistance. For example, the coating layer 910 may be made of a material such as epoxy, non-flammable PCM, FPC 5060, Locitite EA9400, or ceramic. In addition, the coating layer 910 may be formed by spraying in a liquid form. For example, after the barrier 200 is coupled to the slot 312, the coating liquid may be sprayed by the spray machine (sm), and the coating liquid may harden to form the coating layer 910. At this time, the coating layer 910 may be configured to have a thickness of about 0.05 to 2.2 mm.

According to this configuration of the present disclosure, the barrier 200 may suppress, delay, or prevent the propagation of flame or venting gas (g). Therefore, even if a thermal event occurs in the battery cell 100, heat propagation to other battery cells 100 may be effectively suppressed, delayed, or prevented. As a result, thermal safety of the battery module may be improved.

In addition, according to this configuration of the present disclosure, the heat propagation blocking function of the barrier 200 may be stably maintained due to the fire-resistant coating portion 910 even when exposed to flame or venting gas (g).

Referring to FIGS. 1 to 4, a battery module according to an embodiment of the present disclosure may be configured to include an end plate 600, an insulating sheet 700, or a resin 800.

The end plate 600 may be formed in a pair. The end plate 600 may be provided on the front side and rear side of the plurality of battery cells 100, respectively. The end plate 600 may be fastened, coupled, or welded to the front side or rear side of the frame 400, respectively. Alternatively, the end plate 600 may be fastened, coupled, or welded to the open end of the frame 400, respectively. The frame 400 may be internally sealed by being fastened, coupled, or welded to the end plate 600.

The insulating sheet 700 may be configured to be positioned between the end plate 600 and the bus bar frame assembly 300. The insulating sheet 700 may electrically separate the end plate 600 and the bus bar frame assembly 300. The insulating sheet 700 may be configured in a pair. The insulating sheet 700 may be provided between the front end plate 600 and the front bus bar frame assembly 300 and between the rear end plate 600 and the rear bus bar frame assembly 300, respectively.

The resin 800 may be configured to be formed inside the frame 400. The resin 800 may be configured to be positioned between the plurality of battery cells 100 and the lower frame 410. In addition, the resin 800 may be configured to be positioned between the plurality of battery cells 100 and the upper frame 420. In addition, the resin 800 may be configured to be positioned between the plurality of barriers 200 and the lower frame 410. In addition, the resin 800 may be configured to be positioned between the plurality of barriers 200 and the upper frame 420. The resin 800 may fix the positions of the plurality of battery cells 100 or the plurality of barriers 200. In addition, the resin 800 may cool the plurality of battery cells 100 by transferring heat generated from the plurality of battery cells 100 to the frame 400. The resin 800 may be injected into the interior of the frame 400 through holes 411, 421 of the upper frame 420 and the lower frame 410. In addition, flame or venting gas (g) generated inside the battery module may be discharged to the outside through the holes 411, 421.

The buffer pad 500 may be disposed between the outermost barrier 200 and the lower frame 410. Alternatively, the buffer pad 500 may be disposed between the outermost battery cell 100 and the lower frame 410. The buffer pad 500 may be configured in a pair. When swelling occurs from the plurality of battery cells 100, the buffer pad 500 may stably support the plurality of battery cells 100 by being elastically deformed. For example, the buffer pad 500 may be made of silicon material.

Referring to FIGS. 5 to 8, the barrier 200 of the battery module according to an embodiment of the present disclosure may be configured to include a plurality of components.

The barrier 200 includes a pad 210 and a fire-resistant sheet 220 covering the left and right surfaces of the pad 210. The fire-resistant sheet 220 may be configured to include a first fire-resistant sheet 221 and a second fire-resistant sheet 222. The first fire-resistant sheet 221 may cover a left surface of the pad 210. In addition, the first fire-resistant sheet 221 may be bonded to the left surface of the pad 210. The second fire-resistant sheet 222 may cover a right surface of the pad 210. In addition, the second fire-resistant sheet 222 may be bonded to the right surface of the pad 210. The first fire-resistant sheet 221 and the second fire-resistant sheet 222 may be configured in a pair. Alternatively, the first fire-resistant sheet 221 and the second fire-resistant sheet 222 may be formed by folding one sheet. The first fire-resistant sheet 221 and the second fire-resistant sheet 222 may be made of a paper material having fire resistance or heat resistance.

The pad 210 may be configured in a sheet shape. For example, the pad 210 may be made of a silicon material. The pad 210 may be made of a material with high thermal insulation properties. The coating portion 910 is configured to cover a front edge of the first fire-resistant sheet 221, a front edge of the second fire-resistant sheet 222, and a front edge of the pad 210.

According to this configuration of the present disclosure, the barrier 200 may have high fire resistance and thermal insulation properties. While the pad 210 has high thermal insulation properties, it may be easily melted or damaged by flames. While the fire-resistant sheet 220 has high fire resistance or heat resistance, it may not have high thermal insulation properties. Since the pad 210 is positioned between the first fire-resistant sheet 221 and the second fire-resistant sheet 222, it may not be exposed to flames. In addition, the front edge of the pad 210 is covered by the coating portion, so that the pad 210 may not be exposed to flames. As a result, the barrier 200 may not be damaged by flames while having high thermal insulation properties.

Referring to FIGS. 5 to 8, the first fire-resistant sheet 221, the second fire-resistant sheet 222, and the pad 210 of the battery module according to an embodiment of the present disclosure are configured to have substantially the same area. The first fire-resistant sheet 221 and the second fire-resistant sheet 222 may be configured to entirely surround the pad 210. For this reason, when the pad 210 is positioned between the first fire-resistant sheet 221 and the second fire-resistant sheet 222, only the edge portion of the pad 210 may be exposed to the outside. And, at least a portion of the edge of the pad 210 may be covered by the coating portion 910.

In addition, the coating portion 910 may extend to cover an outer surface of the first fire-resistant sheet 221. And, the coating portion 910 may extend to cover an outer surface of the second fire-resistant sheet 222. That is, the coating portion 910 may extend to cover a left surface of the first fire-resistant sheet 221 and a right surface of the second fire-resistant sheet 222.

According to this configuration of the present disclosure, the coating area formed on the barrier 200 is expanded, so that the coating portion 910 may be stably coupled to the barrier 200. As a result, the edge of the pad 210 may not be exposed to flame or venting gas (g).

Referring to FIGS. 5 to 8, the coating portion 910 of the battery module according to an embodiment of the present disclosure may be configured to extend along the perimeter of the pad 210. The coating portion 910 may extend along four sides of the pad 210. For example, the coating portion 910 may extend along the front edge, upper edge, rear edge, and lower edge of the pad 210. Alternatively, when the first fire-resistant sheet 221 and the second fire-resistant sheet 222 are integrally formed, the coating portion 910 may extend along three sides of the pad 210. For example, the coating portion 910 may extend along the front edge, rear edge, and any one of the upper edge and lower edge of the pad 210.

According to this configuration of the present disclosure, the pad 210 may be entirely covered by the first fire-resistant sheet 221 and the second fire-resistant sheet 222 without being exposed to the outside. As a result, the pad 210 may be more reliably protected from flames. As a result, the thermal insulation performance of the barrier 200 may be improved.

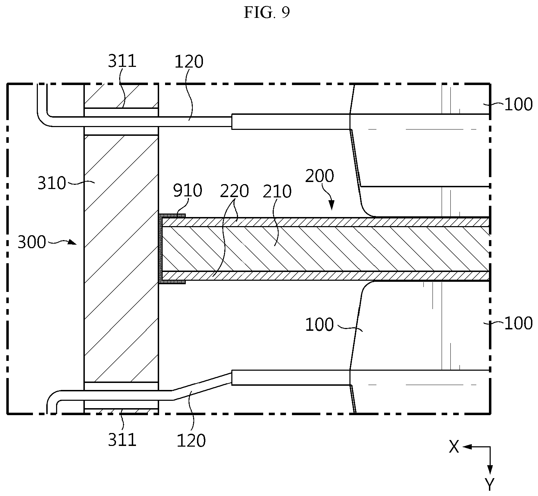

FIG. 9 is a view showing a portion of the cross-sectional configuration taken along the cutting line A-A' in FIG. 1. Referring to FIG. 9, the barrier 200 of the battery module according to an embodiment of the present disclosure may be configured to be in close contact with the bus bar frame assembly 300. In addition, the coating layer 910 of the barrier 200 may be configured to be in close contact with a rear surface of the frame body 310.

According to this configuration of the present disclosure, the gap between the barrier 200 and the frame body 310 may be sealed. As a result, the propagation of flame or venting gas (g) may be suppressed, blocked, delayed, or reduced.

In addition, according to this configuration of the present disclosure, the front edge of the barrier 200 may not be exposed to flame or venting gas (g). As a result, the heat resistance or fire resistance of the barrier 200 may be stably maintained.

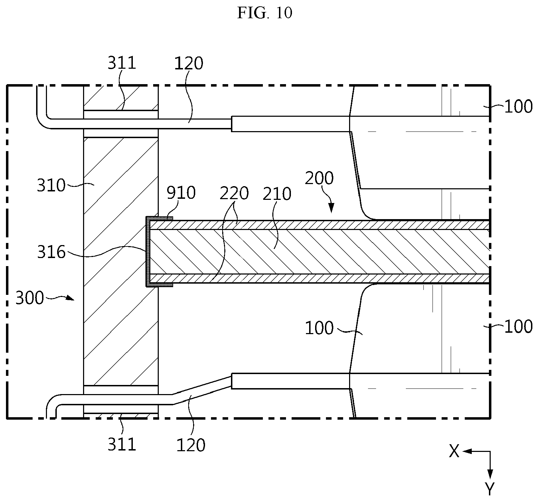

FIG. 10 is a view showing a modified example of the cross-sectional configuration taken along the cutting line A-A' in FIG. 1. Referring to FIG. 10, the bus bar frame assembly 300 of the battery module according to an embodiment of the present disclosure may include a groove 316 formed on the rear surface. And, the barrier 200 may be configured to be inserted into the groove 316. Alternatively, the groove 316 may be formed on the rear surface of the frame body 310. The groove 316 may extend long along the vertical direction or the Z-axis direction. The front side of the barrier 200 may be fitted or inserted into the groove 316.

According to this configuration of the present disclosure, the penetration of flame or venting gas (g) into the front side of the barrier may be further suppressed, reduced, prevented, or blocked. As a result, the heat resistance or fire resistance of the barrier 200 may be stably maintained.

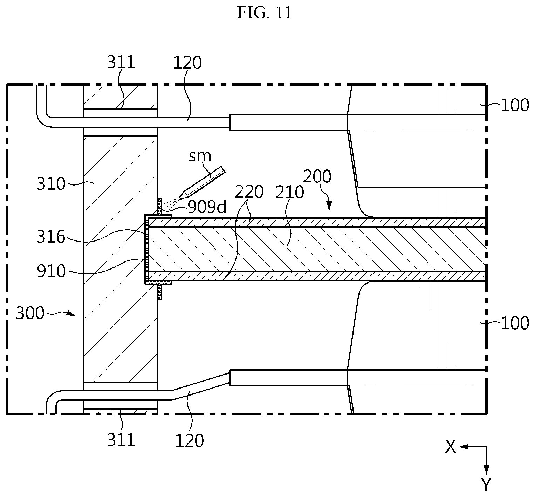

FIG. 11 is a view showing a modified example of the cross-sectional configuration taken along the cutting line A-A' in FIG. 1. Referring to FIG. 11, a battery module according to an embodiment of the present disclosure may be configured to include a coating layer 909d. The coating layer 909d may be configured to fill the gap between the groove and the barrier. The coating layer 909d may be formed over a side surface of the barrier 200 and a rear surface of the frame body 310 adjacent to the groove 316. The coating layer 909d may have fire resistance. For example, after the barrier 200 is coupled to the groove 316, the coating liquid may be sprayed by the spray machine (sm), and the coating liquid may harden to form the coating layer 909d. The coating layer 909d may extend along the longitudinal direction of the groove 316. Alternatively, the coating layer 909d may extend along the perimeter of the barrier 200.

According to this configuration of the present disclosure, the coating layer 909d may reduce, suppress, prevent, or block the penetration of flame or venting gas (g) through the gap between the groove 316 and the barrier 200. As a result, the function of the barrier 200 may be stably maintained, and the thermal safety of the battery module may be improved.

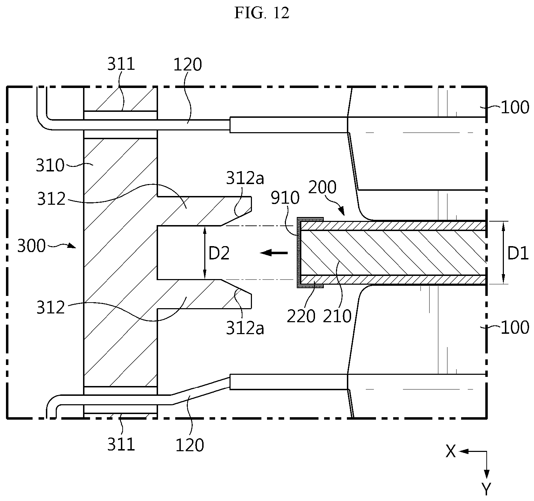

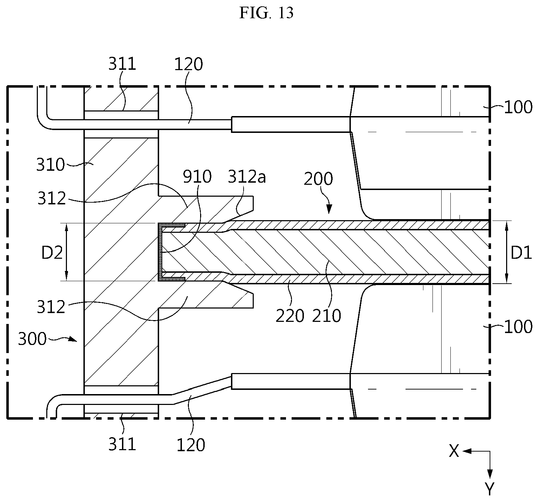

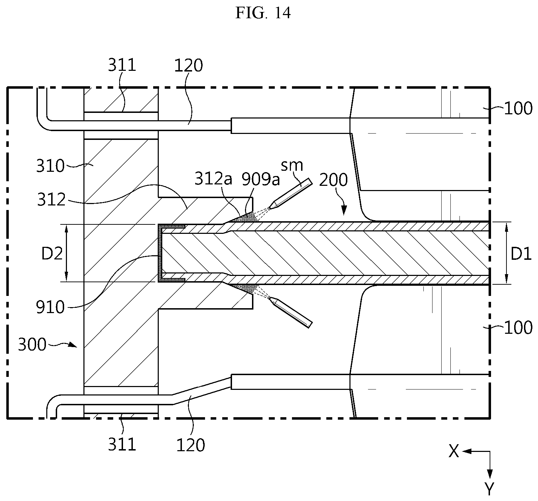

FIG. 12 is an exploded view showing a portion of the cross-sectional configuration taken along the cutting line A-A' in FIG. 1. FIG. 13 is a view showing a portion of the cross-sectional configuration taken along the cutting line A-A' in FIG. 1. FIG. 14 is a view showing a modified example of the cross-sectional configuration taken along the cutting line A-A' in FIG. 1. Referring to FIGS. 12 to 14, the bus bar frame assembly 300 of the battery module according to an embodiment of the present disclosure may include a slot 312.

The frame body 310 may include a slot 312 protruding rearward. The slot 312 may extend long along the vertical direction or the Z-axis direction. The barrier 200 may be fitted or inserted into the slot 312.

According to this configuration of the present disclosure, the barrier 200 may be stably coupled to the bus bar frame assembly 300.

In addition, according to this configuration of the present disclosure, the gap between the barrier 200 and the bus bar frame assembly 300 may be reduced. As a result, flame or venting gas (g) may be prevented from leaking, and the thermal safety of the battery module may be improved.

Referring to FIGS. 12 to 14, the width D2 in the left-right direction or the Y-axis direction of the slot 312 formed in the bus bar frame assembly 300 of the battery module according to an embodiment of the present disclosure may be configured to be smaller than the thickness D1 of the barrier 200. In this case, the thickness D1 of the barrier 200 may be the combined thickness of the first fire-resistant sheet 221, the pad 210, and the second fire-resistant sheet 222.

The pad 210 may be made of an elastic material. For this reason, the barrier 200 may be compressed in the thickness direction or the Y-axis direction. Therefore, the front side of the barrier 200 may be inserted, fitted, or press-fitted into the slot 312.

According to this configuration of the present disclosure, the barrier 200 may be more stably coupled to the bus bar frame assembly 300.

In addition, according to this configuration of the present disclosure, the gap between the barrier 200 and the bus bar frame assembly 300 may be sealed more reliably. As a result, flame or venting gas (g) may be prevented from leaking, and the thermal safety of the battery module may be improved.

Referring to FIGS. 12 to 14, the slot 312 formed in the bus bar frame assembly 300 of the battery module according to an embodiment of the present disclosure may be configured to include an inclined portion 312a. The inclined portion 312a may be configured in a shape whose width becomes wider toward the rear or the -X-axis direction. Alternatively, the inclined portion 312a may be configured in a shape whose width becomes narrower toward the front or the +X-axis direction. The inclined portion 312a may guide the barrier 200 to be fitted into the slot 312. The barrier 200 may slide forward or in the +X-axis direction along the inclined portion 312a. Accordingly, the barrier 200 may be press-fitted into the slot 312.

According to this configuration of the present disclosure, the barrier 200 may be easily coupled to the bus bar frame assembly 300.

Referring to FIG. 14, a battery module according to an embodiment of the present disclosure may be configured to include a coating layer 909a. The coating layer 909a may be configured to fill the gap between the inclined portion 312a and the side surface of the barrier 200. The coating layer 909a may have fire resistance. For example, the coating layer 909a may be made of a material such as epoxy, non-flammable PCM, FPC 5060, Locitite EA9400, or ceramic. In addition, the coating layer 909a may be formed by spraying in a liquid form. For example, after the barrier 200 is coupled to the slot 312, the coating liquid may be sprayed by the spray machine (sm), and the coating liquid may harden to form the coating layer 909a. At this time, the coating layer 909a may be configured to have a thickness of about 0.05 to 2.2 mm. The coating layer 909a may extend along the longitudinal direction of the slot 312. Alternatively, the coating layer 909a may extend along the perimeter of the barrier 200. The coating layer 909a may seal the gap between the barrier 200 and the slot 312.

According to this configuration of the present disclosure, the coating layer 909a may reduce, suppress, prevent, or block the exposure of the front edge of the barrier 200 to flame or venting gas (g). As a result, the function of the barrier 200 may be stably maintained, and the thermal safety of the battery module may be improved.

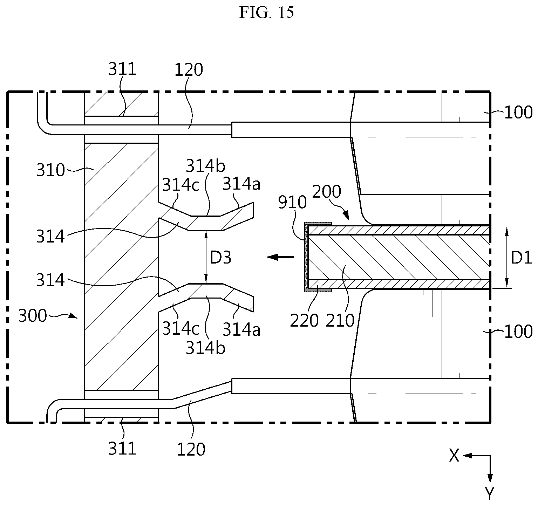

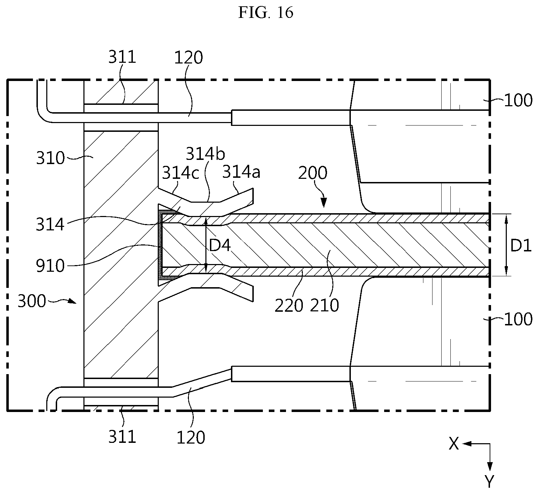

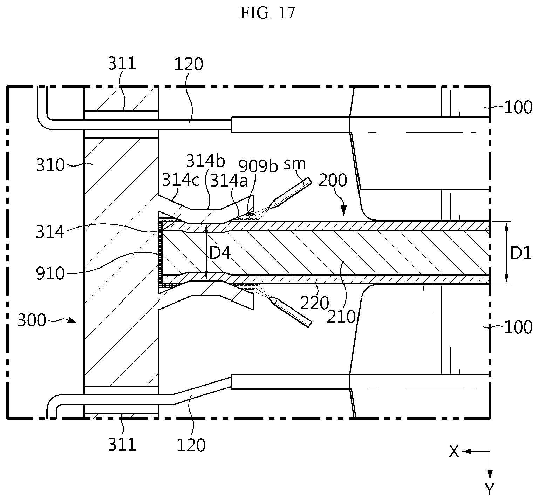

FIG. 15 is a view showing a modified example of the cross-sectional configuration taken along the cutting line A-A' in FIG. 1. FIG. 16 is a view showing a modified example of the cross-sectional configuration taken along the cutting line A-A' in FIG. 1. FIG. 17 is a view showing a modified example of the cross-sectional configuration taken along the cutting line A-A' in FIG. 1. Referring to FIGS. 15 to 17, the bus bar frame assembly 300 of the battery module according to an embodiment of the present disclosure may include a slot 314.

The slot 314 may be configured to include a first inclined portion 314a, a second inclined portion 314c, and a fixed portion 314b. The first inclined portion 314a may be configured in a shape whose width becomes wider toward the rear or the -X-axis direction. Alternatively, the first inclined portion 314a may be configured in a shape whose width becomes narrower toward the front or the +X-axis direction. The first inclined portion 314a may guide the barrier 200 to be fitted into the slot 314. The barrier 200 may slide forward or in the +X-axis along the first inclined portion 314a. Accordingly, the barrier 200 may be inserted, fitted, and press-fitted into the slot 314.

The second inclined portion 314c may be configured in a shape whose width becomes narrower toward the rear or the -X-axis direction. Alternatively, the second inclined portion 314c may be configured in a shape whose width becomes wider toward the front or the +X-axis direction.

The pressing portion 314b may be positioned between the first inclined portion 314a and the second inclined portion 314c. In addition, the pressing portion 314b may connect the first inclined portion 314a and the second inclined portion 314c. The first inclined portion 314a, the second inclined portion 314c, and the pressing portion 314b may be integrally formed. The width D3 of the pressing portion 314b in the left-right direction or the Y-axis direction may be configured to be smaller than the thickness D1 of the barrier 200.

When the barrier 200 is inserted, fitted, press-fitted into, or coupled to the slot 314, the width D4 of the pressing portion 314b may be increased. Accordingly, the pressing portion 314b may compress and fix the barrier 200. The second inclined portion 314c may provide elasticity to the pressing portion 314b so that the widths D3, D4 of the pressing portion 314b may increase.

According to this configuration of the present disclosure, the barrier 200 may be more stably coupled to the bus bar frame assembly 300 by being compressed by the pressing portion 314b.

Referring to FIG. 17, a battery module according to an embodiment of the present disclosure may be configured to include a coating layer 909b. The coating layer 909b may be configured to fill the gap between the first inclined portion 314a and the side surface of the barrier 200. The coating layer 909b may have fire resistance. The coating layer 909b may extend along the longitudinal direction of the slot 314. Alternatively, the coating layer 909b may extend along the perimeter of the barrier 200. The coating layer 909b may seal the gap between the barrier 200 and the slot 314.

According to this configuration of the present disclosure, the coating layer 909b may reduce, suppress, prevent, or block the exposure of the front edge of the barrier 200 to flame or venting gas (g). As a result, the function of the barrier 200 may be stably maintained, and the thermal safety of the battery module may be improved.

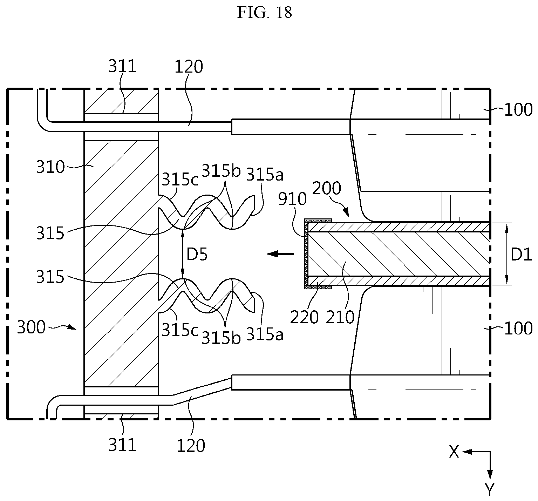

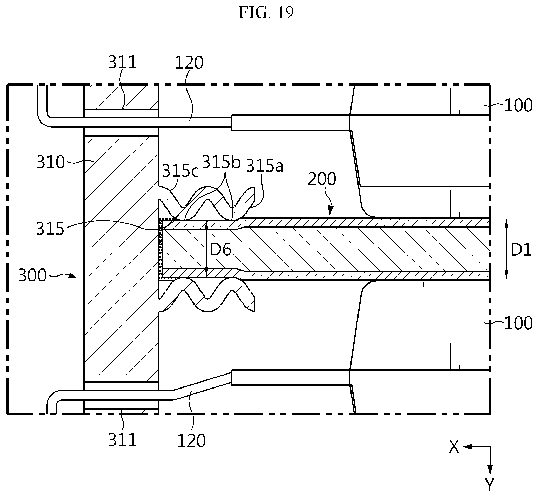

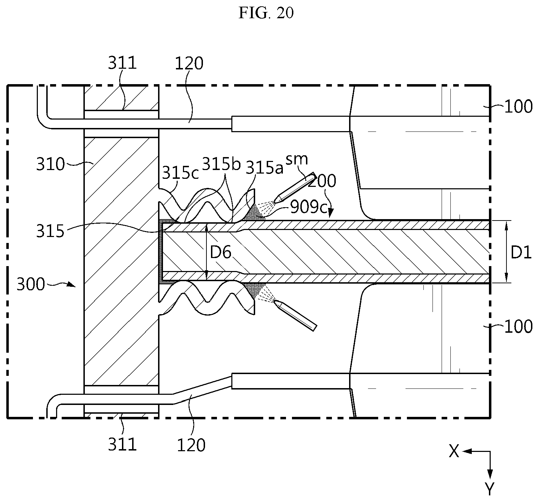

FIG. 18 is a view showing a modified example of the cross-sectional configuration taken along the cutting line A-A' in FIG. 1. FIG. 19 is a view showing a modified example of the cross-sectional configuration taken along the cutting line A-A' in FIG. 1. FIG. 20 is a view showing a modified example of the cross-sectional configuration taken along the cutting line A-A' in FIG. 1. Referring to FIGS. 18 to 20, the bus bar frame assembly 300 of the battery module according to an embodiment of the present disclosure may include a slot 315.

The slot 315 may be configured to include a first inclined portion 315a, a second inclined portion 315C, and a fixed portion 315b. The first inclined portion 315a may be configured in a shape whose width becomes wider toward the rear or the -X-axis direction. Alternatively, the first inclined portion 315a may be configured in a shape whose width becomes narrower toward the front or the +X-axis direction. The first inclined portion 315a may guide the barrier 200 to be fitted into the slot 315. The barrier 200 may slide forward or in the +X-axis along the first inclined portion 315a. Accordingly, the barrier 200 may be inserted, fitted, and press-fitted into the slot 315.

The second inclined portion 315c may be configured in a shape whose width becomes narrower toward the rear or the -X-axis direction. Alternatively, the second inclined portion 315c may be configured in a shape whose width becomes wider toward the front or the +X-axis direction.

The pressing portion 315b may be positioned between the first inclined portion 315a and the second inclined portion 315c. In addition, the pressing portion 315b may connect the first inclined portion 315a and the second inclined portion 315c. The first inclined portion 315a, the second inclined portion 315c, and the pressing portion 315b may be integrally formed.

The width D5 of the pressing portion 315b in the left-right direction or the Y-axis direction may be configured to be smaller than the thickness D1 of the barrier 200. At this time, the width D5 of the pressing portion 315b may be the minimum width D5 of the slot 315. The thickness of the compression portion 201 of the barrier 200 may decrease toward the front or the +X-axis direction.

When the barrier 200 is inserted, fitted, press-fitted into, or coupled to the slot 315, the width D6 of the pressing portion 315b may be increased. Accordingly, the pressing portion 315b may compress and fix the barrier 200. The pressing portion 315b may have a concavo-convex shape and may be in line contact or point contact with the barrier 200. The second inclined portion 315c may provide elasticity to the pressing portion 315b so that the widths D5, D6 of the pressing portion 315b may increase.

According to this configuration of the present disclosure, the barrier 200 may be more stably coupled to the bus bar frame assembly 300 by being compressed by the pressing portion 315b.

Referring to FIG. 20, a battery module according to an embodiment of the present disclosure may be configured to include a coating layer 909c. The coating layer 909c may be configured to fill the gap between the first inclined portion 315a and the side surface of the barrier 200. The coating layer 909c may have fire resistance. The coating layer 909c may extend along the longitudinal direction of the slot 315. Alternatively, the coating layer 909c may extend along the perimeter of the barrier 200. The coating layer 909c may seal the gap between the barrier 200 and the slot 315.

According to this configuration of the present disclosure, the coating layer 909c may reduce, suppress, prevent, or block the exposure of the front edge of the barrier 200 to flame or venting gas (g). As a result, the function of the barrier 200 may be stably maintained, and the thermal safety of the battery module may be improved.

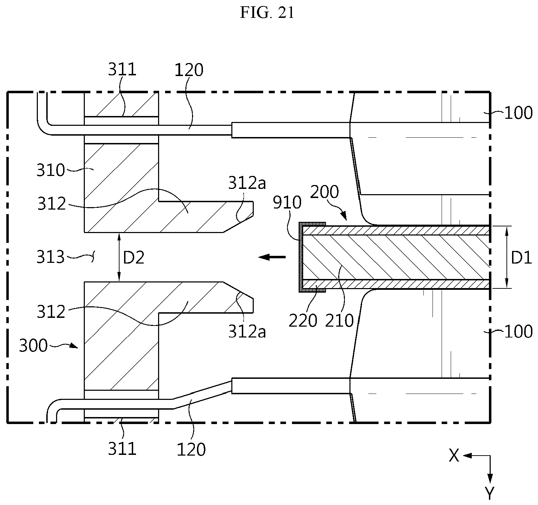

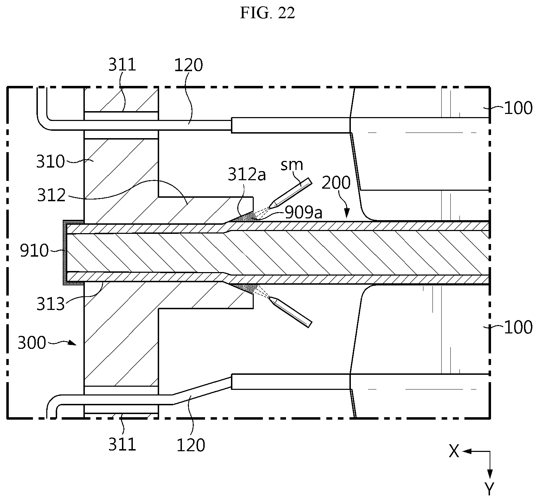

FIG. 21 is a view showing a modified example of the cross-sectional configuration taken along the cutting line A-A' in FIG. 1. FIG. 22 is a view showing a modified example of the cross-sectional configuration taken along the cutting line A-A' in FIG. 1. Referring to FIGS. 21 and 22, the bus bar frame assembly 300 of the battery module according to an embodiment of the present disclosure may include a hole 313.

The hole 313 may penetrate the frame body 310 in the front-rear direction or the X-axis direction. The frame body 310 may include a slot 312 protruding rearward and adjacent to the hole 313. In this case, the slot 312 may be referred to as a guide 312 or a guide slot 312. The hole 313 may be formed long in the vertical direction or the Z-axis direction along the slot 312.

The barrier 200 may be fitted or inserted into the slot 312. In addition, at least a portion of the barrier 200 may be inserted into the hole 313. Alternatively, the barrier 200 may pass through the hole 313. In this case, the length of the hole 313 may be configured to be substantially equal to the length of the barrier 200 in the vertical direction or the Z-axis direction. In addition, the width D2 in the left-right direction or the width D2 in the Y-axis direction of the hole 313 may be formed to be the same as the width D2 of the slot 312.

According to this configuration of the present disclosure, the barrier 200 may be stably coupled to the bus bar frame assembly 300.

In addition, according to this configuration of the present disclosure, the front side or front edge of the barrier 200 is located on the front side of the frame body, so that exposure to flame or venting gas (g) may be reduced, suppressed, blocked, or prevented.

In addition, referring to FIGS. 21 and 22, a battery module according to an embodiment of the present disclosure may be configured to include a coating layer 909a. The coating layer 909a may be configured to fill the gap between the inclined portion 312a and the side surface of the barrier 200. The coating layer 909a may have fire resistance. The coating layer 909a may extend along the longitudinal direction of the slot 312 in the vertical direction or along the Z-axis direction. Alternatively, the coating layer 909a may extend along the perimeter of the barrier 200. The coating layer 909a may seal the gap between the barrier 200 and the slot 312.

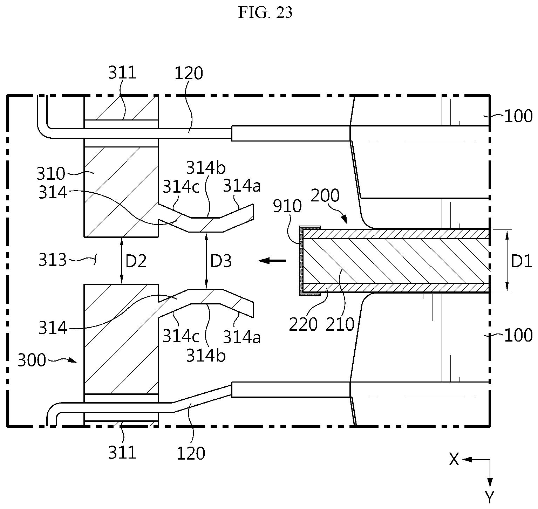

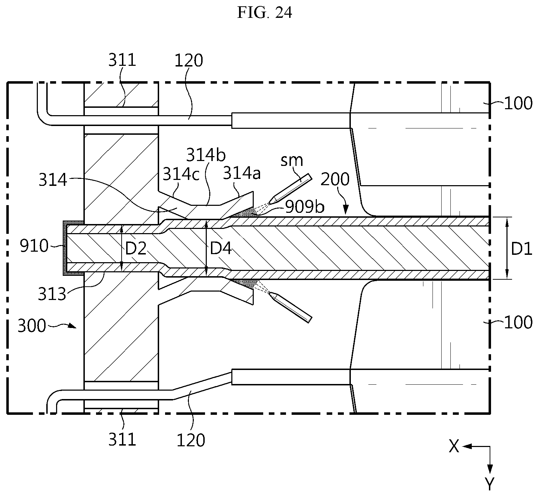

FIG. 23 is a view showing a modified example of the cross-sectional configuration taken along the cutting line A-A' in FIG. 1. FIG. 24 is a view showing a modified example of the cross-sectional configuration taken along the cutting line A-A' in FIG. 1. Referring to FIGS. 23 and 24, the bus bar frame assembly 300 of the battery module according to an embodiment of the present disclosure may include a hole 313.

The hole 313 may penetrate the frame body 310 in the front-rear direction or the X-axis direction. The frame body 310 may include a slot 314 protruding rearward and adjacent to the hole 313. In this case, the slot 314 may be referred to as a guide 314 or a guide slot 314. The hole 313 may be formed long in the vertical direction or the Z-axis direction along the slot 314.

The barrier 200 may be fitted or inserted into the slot 314. In addition, at least a portion of the barrier 200 may be inserted into the hole 313. Alternatively, the barrier 200 may pass through the hole 313. In this case, the length of the hole 313 may be configured to be substantially equal to the length of the barrier 200 in the vertical direction or the Z-axis direction. Before the barrier 200 is inserted into the hole 313, the width D2 in the left-right direction or the width D2 in the Y-axis direction of the hole 313 may be formed to be equal to or smaller than the width D3 of the slot 314. In addition, after the barrier 200 is inserted into the hole 313, the width D2 in the left-right direction or the width D2 in the Y-axis direction of the hole 313 may be formed to be smaller than the width D4 of the slot 314.

According to this configuration of the present disclosure, the barrier 200 may be stably coupled to the bus bar frame assembly 300.

In addition, according to this configuration of the present disclosure, the front side or front edge of the barrier 200 is located on the front side of the frame body, so that exposure to flame or venting gas (g) may be reduced, suppressed, blocked, or prevented.

In addition, referring to FIGS. 23 and 24, a battery module according to an embodiment of the present disclosure may be configured to include a coating layer 909b. The coating layer 909b may be configured to fill the gap between the inclined portion 314a and the side surface of the barrier 200. The coating layer 909b may have fire resistance. The coating layer 909b may extend along the longitudinal direction of the slot 314 in the vertical direction or along the Z-axis direction. Alternatively, the coating layer 909b may extend along the perimeter of the barrier 200. The coating layer 909b may seal the gap between the barrier 200 and the slot 314.

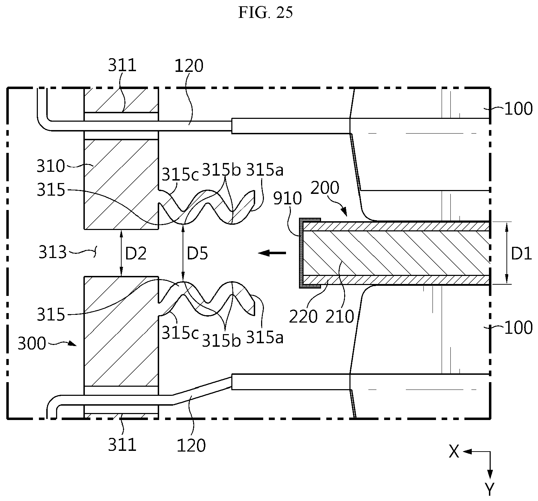

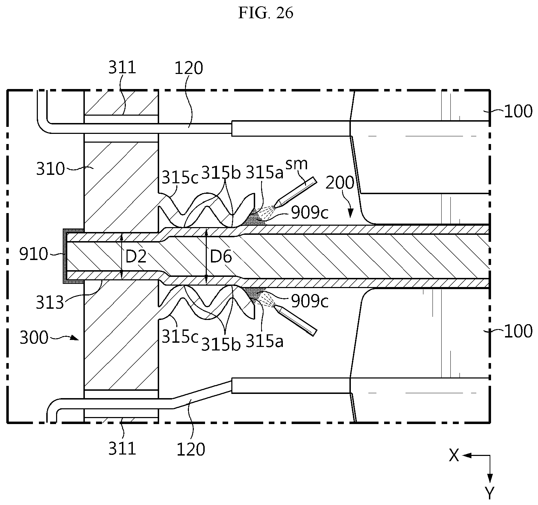

FIG. 25 is a view showing a modified example of the cross-sectional configuration taken along the cutting line A-A' in FIG. 1. FIG. 26 is a view showing a modified example of the cross-sectional configuration taken along the cutting line A-A' in FIG. 1. Referring to FIGS. 25 and 26, the bus bar frame assembly 300 of the battery module according to an embodiment of the present disclosure may include a hole 313.

The hole 313 may penetrate the frame body 310 in the front-rear direction or the X-axis direction. The frame body 310 may include a slot 315 protruding rearward and adjacent to the hole 313. In this case, the slot 315 may be referred to as a guide 315 or a guide slot 315. The hole 313 may be formed long in the vertical direction or the Z-axis direction along the slot 315.

The barrier 200 may be fitted or inserted into the slot 315. In addition, at least a portion of the barrier 200 may be inserted into the hole 313. Alternatively, the barrier 200 may pass through the hole 313. In this case, the length of the hole 313 may be configured to be substantially equal to the length of the barrier 200 in the vertical direction or the Z-axis direction. Before the barrier 200 is inserted into the hole 313, the width D2 in the left-right direction or the width D2 in the Y-axis direction of the hole 313 may be formed to be equal to or smaller than the width D5 of the slot 315. In addition, after the barrier 200 is inserted into the hole 313, the width D2 in the left-right direction or the width D2 in the Y-axis direction of the hole 313 may be formed to be smaller than the width D6 of the slot 315.

According to this configuration of the present disclosure, the barrier 200 may be stably coupled to the bus bar frame assembly 300.

In addition, according to this configuration of the present disclosure, the front side or front edge of the barrier 200 is located on the front side of the frame body, so that exposure to flame or venting gas (g) may be reduced, suppressed, blocked, or prevented.

In addition, referring to FIGS. 25 and 26, a battery module according to an embodiment of the present disclosure may be configured to include a coating layer 909c. The coating layer 909c may be configured to fill the gap between the inclined portion 315a and the side surface of the barrier 200. The coating layer 909c may have fire resistance. The coating layer 909c may extend along the longitudinal direction of the slot 315 in the vertical direction or along the Z-axis direction. Alternatively, the coating layer 909c may extend along the perimeter of the barrier 200. The coating layer 909c may seal the gap between the barrier 200 and the slot 315.

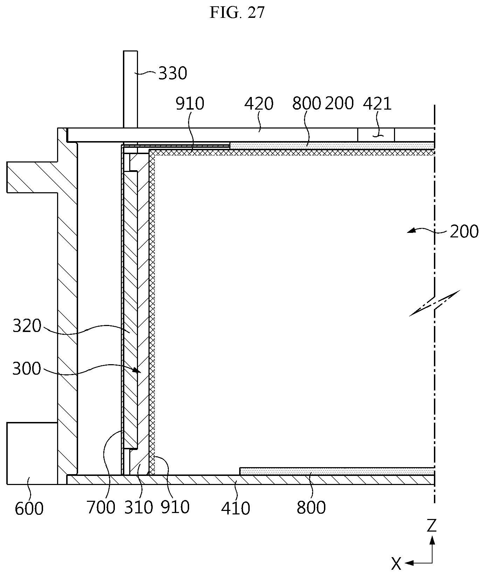

FIG. 27 is a view showing a portion of the cross-sectional configuration taken along the cutting line B-B' in FIG. 1. Referring to FIG. 27, the battery module according to an embodiment of the present disclosure may further include a resin 800 disposed on an interior surface of the frame 400. The resin 800 may be referred to as a thermal resin 800. At least a portion of the upper edge or lower edge of the barrier 200 may be configured to be adhered to the thermal resin 800.

For example, the barrier 200 may be adhered to the thermal resin 800 while four edges are covered by the coating layer 910.

Alternatively, at least a portion of the upper edge or lower edge of the barrier 200 may not be coated by the coating layer 910. In this case, the upper edge or lower edge of the barrier 200 may be configured to be coated or covered by the thermal resin 800. Accordingly, the pad 210 of the barrier 200 may not be exposed to the outside.

In addition, the thermal resin 800 may be formed only between the bottom plate of the lower frame 410 and the barrier 200. In this case, the thermal resin 800 may not be disposed between the upper frame 420 and the barrier 200. For this reason, when a thermal event occurs, the flame or venting gas (g) may be vented upward.

According to this configuration of the present disclosure, the barrier 200 may be fixed in the vertical direction. As a result, the barrier 200 may support the battery cell 100 more stably.

In addition, according to this configuration of the present disclosure, the thermal resin 800 may fill the gap between the barrier 200 and the frames 410, 420. As a result, the propagation of flame or venting gas (g) may be reduced, suppressed, prevented, or blocked.

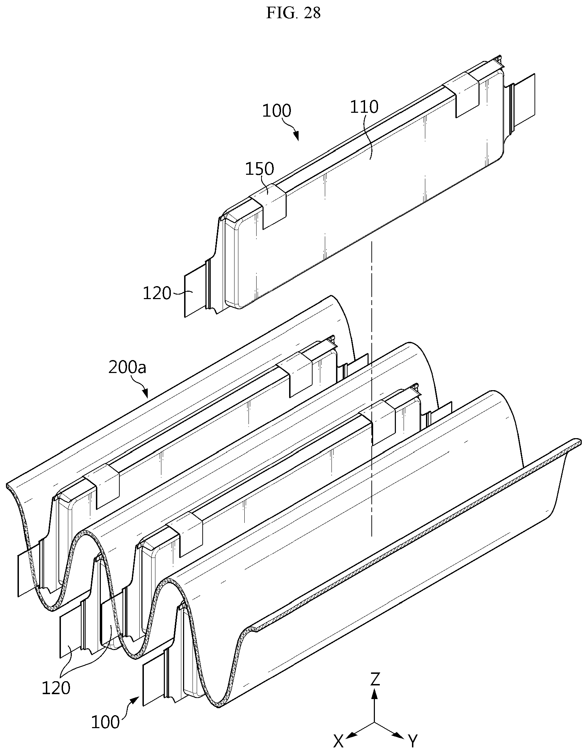

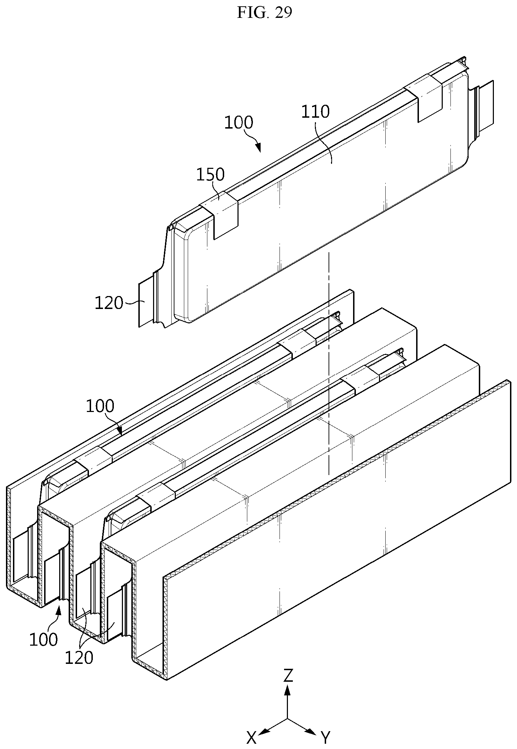

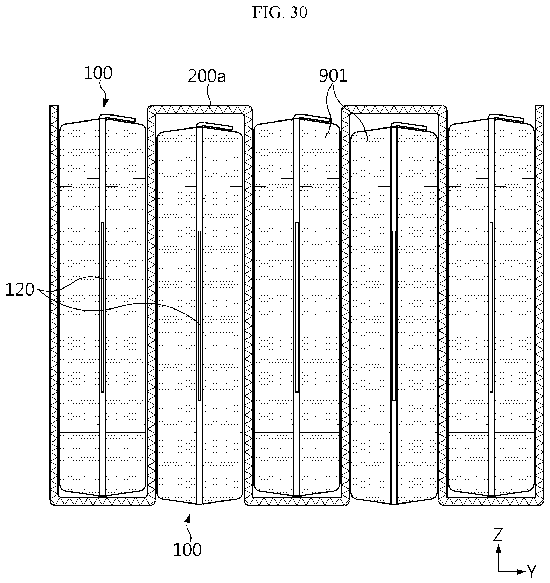

FIG. 28 is a view showing a barrier 200a and a battery cell 100 of a battery module according to another embodiment of the present disclosure. FIG. 29 is a view showing the coupling of a barrier 200a and a battery cell 100 of a battery module according to another embodiment of the present disclosure. FIG. 30 is a front view showing the coupling of a barrier 200a and a battery cell 100 of a battery module according to another embodiment of the present disclosure. Referring to FIGS. 28 to 30, a battery module according to another embodiment of the present disclosure may include a barrier 200a made of a single material.

The barrier 200a may be configured to have a corrugated cardboard shape, corrugated cardboard structure, or corrugated structure. The barrier 200a may be made of a paper having fire resistance. The barrier 200a may be configured to include a pair of paper sheets and a corrugated paper sheet adhered between the pair of paper sheets. The barrier 200a may be formed in a corrugated structure to have peaks and valleys. The plurality of battery cells 100 may be disposed to be located at the peak and valley, respectively. The plurality of battery cells 100 and the barrier 200a may be configured to be in close contact.

In this case, the length of the barrier 200a in the front-rear direction or the X-axis direction may be configured to be longer than the length of the body 110 of the battery cell 100 in the front-rear direction or the X-axis direction. For this reason, the barrier 200a may cover the entire side surface of the battery cell 100 and may be configured to cover at least a portion of the electrode lead 120. The front edge or rear edge of the barrier 200a may be in close contact with, contacted to, coupled to, fastened to, or inserted into the bus bar frame assembly 300.

According to this configuration of the present disclosure, the barrier 200a may be configured to be deformable in the left-right direction or the Y-axis direction by having a corrugated cardboard structure. For this reason, when swelling occurs in the battery cell 100, the barrier 200a may be compressed in the left-right direction or the Y-axis direction, thereby stably support the battery cell 100.

A battery pack according to the present disclosure may include two or more battery modules according to the present disclosure described above.

Also, the battery pack according to the present disclosure may further include various other components in addition to the battery module, for example, components of a battery pack known at the time of filing of the present disclosure, such as a BMS, a bus bar, a pack case, a relay, a current sensor, or the like.

A vehicle according to the present disclosure may include two or more battery modules according to the present disclosure described above. The battery module according to the present disclosure may be applied to vehicles such as electric vehicles or hybrid vehicles. That is, the vehicle according to the present disclosure may include a battery module according to the present disclosure or a battery pack according to the present disclosure. Also, the vehicle according to the present disclosure may further include various other components included in the vehicle in addition to the battery module or the battery pack. For example, the vehicle according to the present disclosure may further include a vehicle body, a motor, a control device such as an electronic control unit (ECU), or the like, in addition to the battery module according to the present disclosure.

Meanwhile, the terms indicating directions as used herein such as upper, lower, left, right, front, and rear are used for convenience of description only, and it is obvious to those skilled in the art that the term may change depending on the position of the stated element or an observer.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure and the equivalent scope of the appended claims.

Also, the battery pack according to the present disclosure may further include various other components in addition to the battery module, for example, components of a battery pack known at the time of filing of the present disclosure, such as a BMS, a bus bar, a pack case, a relay, a current sensor, or the like.

A vehicle according to the present disclosure may include two or more battery modules according to the present disclosure described above. The battery module according to the present disclosure may be applied to vehicles such as electric vehicles or hybrid vehicles. That is, the vehicle according to the present disclosure may include a battery module according to the present disclosure or a battery pack according to the present disclosure. Also, the vehicle according to the present disclosure may further include various other components included in the vehicle in addition to the battery module or the battery pack. For example, the vehicle according to the present disclosure may further include a vehicle body, a motor, a control device such as an electronic control unit (ECU), or the like, in addition to the battery module according to the present disclosure.

Meanwhile, the terms indicating directions as used herein such as upper, lower, left, right, front, and rear are used for convenience of description only, and it is obvious to those skilled in the art that the term may change depending on the position of the stated element or an observer.

## Claims

1. A battery module comprising:
a frame (400) providing an interior space, the frame extending in a front-rear direction (X);
a plurality of battery cells (100) accommodated inside the frame (400) and disposed or stacked in a left-right direction (Y);
a bus bar frame assembly (300) located in front of the plurality of battery cells (100), with respect to the front-rear direction, and electrically connected to the plurality of battery cells (100); and
a barrier (200) disposed between the plurality of battery cells (100) and configured such that a front edge, with respect to the front-rear direction, is covered by a fire-resistant coating portion (910),
wherein the barrier (200) comprises:
a pad (210); and
a fire-resistant sheet (220) covering the left and right surfaces of the pad (210),
wherein the coating portion (910) covers the front edge of the fire-resistant sheet (220) and the front edge of the pad (210).

2. The battery module according to claim 1,
wherein the coating portion (910) extends to cover an outer surface of the fire-resistant sheet (220).

3. The battery module according to claim 1,
wherein the coating portion (910) extends along the perimeter of the pad (210).

4. The battery module according to claim 1,
wherein the barrier (200) is in close contact with the bus bar frame assembly (300).

5. The battery module according to claim 4,
wherein the bus bar frame assembly (300) comprises a groove (316) formed on the rear surface,
wherein the barrier (200) is inserted into the groove (316).

6. The battery module according to claim 4,
wherein the bus bar frame assembly (300) comprises a slot (312) protruding from the rear surface,
wherein the barrier (200) is inserted into the slot (312).

7. The battery module according to claim 6,
which further comprises a second coating layer (909d) covering the gap between the slot (312) and the barrier (200).

8. The battery module according to claim 1,
wherein the bus bar frame assembly (300) has a hole (313) formed long in the vertical direction,
wherein the barrier (200) penetrates the hole (313).

9. The battery module according to claim 1,
which further comprises a thermal resin (800) disposed on the inner surface of the frame (400),
wherein at least a portion of the upper edge or lower edge of the barrier (200) is adhered to the thermal resin (800).

10. A battery pack comprising a battery module according to any one of claims 1 to 9.

11. A vehicle comprising a battery module according to any one of claims 1 to 9.

## Patentansprüche

1. Batteriemodul, umfassend:
einen Rahmen (400), welcher einen Innenraum bereitstellt, wobei sich der Rahmen in einer Vorne-Hinten-Richtung (X) erstreckt;
eine Mehrzahl von Batteriezellen (100), welche innerhalb des Rahmens (400) untergebracht und angeordnet oder gestapelt sind in einer Links-Rechts-Richtung (Y);
eine Stromschienenrahmenanordnung (300), welche in Bezug auf die Vorne-Hinten-Richtung vor der Mehrzahl von Batteriezellen (100) angeordnet ist und elektrisch mit der Mehrzahl von Batteriezellen (100) verbunden ist; und
eine Barriere (200), welche zwischen der Mehrzahl von Batteriezellen (100) angeordnet und derart eingerichtet ist, dass ein in Bezug auf die Vorne-Hinten-Richtung vorderer Rand durch einen feuerresistenten Beschichtungsabschnitt (910) abgedeckt ist,
wobei die Barriere (200) umfasst:
ein Pad (210); und
einen feuerresistenten Bogen (220), welcher die linke und die rechte Fläche des Pads (210) abdeckt,
wobei der Beschichtungsabschnitt (910) den vorderen Rand des feuerresistenten Bogens (220) und den vorderen Rand des Pads (210) abdeckt.

2. Batteriemodul nach Anspruch 1,
wobei sich der Beschichtungsabschnitt (910) erstreckt, um eine äußere Fläche des feuerresistenten Bogens (220) abzudecken.

3. Batteriemodul nach Anspruch 1,
wobei sich der Beschichtungsabschnitt (910) entlang des Perimeters des Pads (210) erstreckt.

4. Batteriemodul nach Anspruch 1,
wobei die Barriere (200) in engem Kontakt mit der Stromschienenrahmenanordnung (300) steht.

5. Batteriemodul nach Anspruch 4,
wobei die Stromschienenrahmenanordnung (300) eine Nut (316) umfasst, welche an der hinteren Fläche gebildet ist,
wobei die Barriere (200) in die Nut (316) eingesetzt ist.

6. Batteriemodul nach Anspruch 4,
wobei die Stromschienenrahmenanordnung (300) einen Schacht (312) umfasst, welcher von der hinteren Fläche hervorsteht,
wobei die Barriere (200) in den Schacht (312) eingesetzt ist.

7. Batteriemodul nach Anspruch 6,
welches ferner eine zweite Beschichtungsschicht (909d) umfasst, welche den Freiraum zwischen dem Schacht (312) und der Barriere (200) abdeckt.

8. Batteriemodul nach Anspruch 1,
wobei die Stromschienenrahmenanordnung (300) ein Loch (313) aufweist, welches länglich in die vertikale Richtung gebildet ist,
wobei die Barriere (200) das Loch (313) durchdringt.

9. Batteriemodul nach Anspruch 1,
welches ferner ein Thermoharz (800) umfasst, welches an der Innenfläche des Rahmens (400) angeordnet ist,
wobei wenigstens ein Abschnitt des oberen Randes oder unteren Randes der Barriere (200) an dem Thermoharz (800) befestigt ist.

10. Batteriepack umfassend ein Batteriemodul nach einem der Ansprüche 1 bis 9.

11. Fahrzeug umfassend ein Batteriemodul nach einem der Ansprüche 1 bis 9.

## Revendications

1. Module de batterie comprenant :
un cadre (400) fournissant un espace intérieur, le cadre s'étendant dans une direction avant-arrière (X) ;
une pluralité de cellules de batterie (100) logées à l'intérieur du cadre (400) et disposées ou empilées dans une direction gauche-droite (Y),
un ensemble de barre omnibus de cadre (300) situé devant la pluralité de cellules de batterie (100), par rapport à la direction avant-arrière, et connecté électriquement à la pluralité de cellules de batterie (100) ; et
une barrière (200) disposée entre la pluralité de cellules de batterie (100) et configurée de façon à ce qu'un bord avant, par rapport à la direction avant-arrière, soit recouvert par une partie de revêtement ignifuge (910),
dans lequel la barrière (200) comprend :
un tampon (210) ; et
une feuille ignifuge (220) recouvrant les surfaces gauche et droite du tampon (210),
dans lequel la partie de revêtement (910) recouvre le bord avant de la feuille ignifuge (220) et le bord avant du tampon (210).

2. Module de batterie selon la revendication 1,
dans lequel la partie de revêtement (910) s'étend pour recouvrir une surface externe de la feuille ignifuge (220).

3. Module de batterie selon la revendication 1,
dans lequel la partie de revêtement (910) s'étend le long du périmètre du tampon (210).

4. Module de batterie selon la revendication 1,
dans lequel la barrière (200) est en contact étroit avec l'ensemble de barre omnibus de cadre (300).

5. Module de batterie selon la revendication 4,
dans lequel l'ensemble de barre omnibus de cadre (300) comprend une rainure (316) formée sur la surface arrière,
dans lequel la barrière (200) est insérée dans la rainure (316).

6. Module de batterie selon la revendication 4,
dans lequel l'ensemble de barre omnibus de cadre (300) comprend une fente (312) qui fait saillie à partir de la surface arrière,
dans lequel la barrière (200) est insérée dans la fente (312).

7. Module de batterie selon la revendication 6,
qui comprend en outre une deuxième couche de revêtement (909d) recouvrant l'espace entre la fente (312) et la barrière (200).

8. Module de batterie selon la revendication 1,
dans lequel l'ensemble de barre omnibus de cadre (300) présente un trou (313) formé long dans la direction verticale,
dans lequel la barrière (200) pénètre dans le trou (313).

9. Module de batterie selon la revendication 1,
qui comprend en outre une résine thermique (800) disposée sur la surface interne du cadre (400),
dans lequel au moins une partie du bord supérieur ou du bord inférieur de la barrière (200) est collée à la résine thermique (800).

10. Bloc-batterie comprenant un module de batterie selon l'une quelconque des revendications 1 à 9.

11. Véhicule comprenant un module de batterie selon l'une quelconque des revendications 1 à 9.
